Europäisches Patentamt

**European Patent Office**

Office européen des brevets

(19)

(11) Veröffentlichungsnummer : **0 114 983**
**B1**

(12) **EUROPÄISCHE PATENTSCHRIFT**

(45) Veröffentlichungstag der Patentschrift :
25.03.87

(51) Int. Cl.⁴ : **A 01 C   7/08**, A 01 B 73/00

(21) Anmeldenummer : 83112220.5

(22) Anmeldetag : 06.12.83

(54) **Landwirtschaftlich nutzbares Arbeitsgerät.**

(30) Priorität : 27.12.82 US 453076

(43) Veröffentlichungstag der Anmeldung :
08.08.84 Patentblatt 84/32

(45) Bekanntmachung des Hinweises auf die Patenterteilung : 25.03.87 Patentblatt 87/13

(84) Benannte Vertragsstaaten :
DE FR GB

(56) Entgegenhaltungen :
FR-A- 2 483 731
US-A- 3 505 704
US-A- 3 982 773
US-A- 4 172 537
US-A- 4 214 637

(73) Patentinhaber : DEERE & COMPANY
1 John Deere Road
Moline Illinois 61265 (US)

(72) Erfinder : Bedney, Harris Ivan
3711 - 31st Avenue
Rock Island Illinois 61201 (US)

(74) Vertreter : Sartorius, Peter
DEERE & COMPANY European Office, Patent Department Postfach 503 Steubenstrasse 36-42
D-6800 Mannheim 1 (DE)

## Beschreibung

Die Erfindung bezieht sich auf ein landwirtschaftlich nutzbares Arbeitsgerät zum Anschluß an einen Schlepper mit einer sich in Fahrtrichtung erstreckenden Anhängevorrichtung und einem mittleren auf Laufrädern abstützbaren Rahmenteil zur Aufnahme von Geräteteilen bzw. Arbeitswerkzeugen, sowie rechten und linken ebenfalls auf Laufrädern abstützbaren, Geräteteile bzw. Arbeitswerkzeuge aufweisenden, verstellbar angeordneten Rahmenteilen, die an einen feststehenden Querträger angeschlossen sind und sich in der Arbeitsstellung quer zur Bewegungsrichtung des Arbeitsgerätes erstrecken und aus dieser Stellung in eine Transportlage verschwenkbar sind, in der sie sich in Längsrichtung der Anhängevorrichtung erstrecken, wobei der mittlere Rahmenteil über mindestens einen sich in Fahrtrichtung erstreckenden Träger an die Rückseite des feststehenden Querträgers mit Abstand dazu angeschlossen ist.

Es ist bereits eine Sämaschine bekannt (US-A-4 137 852), die aus zwei an einer Anhängevorrichtung angeschlossenen, verschwenkbar gelagerten Rahmenteilen gebildet ist, an der zahlreiche Sävorrichtungen angeschlossen sind. Zwischen den einzelnen Sävorrichtungen befinden sich Laufräder, auf denen sich die Rahmenteile abstützen. An der Anhängevorrichtung befindet sich am hinteren Ende ein Querträger, an dem ebenfalls sich nach hinten erstreckende Laufräder sowie Sävorrichtungen angeordnet sind. In der Arbeitsstellung liegen die beiden verschwenkbaren Rahmenteile sowie der hintere Querträger alle auf der gleichen Querebene. Da die einzelnen Laufräder zwischen den einzelnen Sävorrichtungen liegen, lassen sich die Sävorrichtungen nicht ohne weiteres stufenlos in jede beliebige Stellung an den Rahmenteilen verschieben.

Es ist ein Geräteträger für eine Krümelwalze bekannt, die aus einem V-förmig ausgebildeten Rahmen besteht, in dessen hinterem Bereich zwei Laufräder unterhalb des kastenförmigen Rahmens angeordnet sind (FR-A-2 483 731). An dem kastenförmigen Rahmen sind zwei Auslegerrahmen mit Krümelwalzen horizontal schwenkbar angeschlossen, so daß sie von einer Arbeitsstellung in eine Transportstellung verschwenkbar sind, in der die Rahmen V-förmig zueinander verlaufen. Da der Schwerpunkt des gesamten Rahmens relativ hoch ist, erhält man eine sehr instabile Maschine, insbesondere bei Fahrten am Hang.

Ferner ist eine Sämaschine bekannt (US-A-4 214 637), die einen Rahmenträger mit einem quer verlaufenden Rahmenteil aufweist, an den zwei Saatgutbehälter horizontal schwenkbar angeschlossen sind, so daß sie von ihrer quer verlaufenden Arbeitsstellung in eine in Fahrtrichtung verlaufende Transportstellung verschwenkbar sind. An der Rückseite des quer verlaufenden Rahmenträgers ist ein weiterer Rahmenteil mit einem Behälter zur Aufnahme von Düngemittel angeordnet, der über mehrere sich in Fahrtrichtung erstreckende Lenker mit dem quer verlaufenden Rahmenträger verbunden ist. Die Laufräder sind dabei so angeordnet, daß sie unterhalb des quer verlaufenden Rahmenträgers zwischen den beiden verschwenkbaren Rahmenträgern angeordnet sind, so daß diese relativ viel Platz einnehmen, wodurch die Transportbreite der Maschine ebenfalls sehr groß wird.

Ferner ist ein Arbeitsgerät der eingangs aufgeführten Art bekannt (US-A-4 172 537), das aus einem sich in Fahrtrichtung erstreckenden Rahmen besteht, der aus parallel zueinander verlaufenden Rahmenträgern gebildet ist. In hinteren Bereich des Rahmenträgers befindet sich ein Querträger, an dem zwei Rahmenträger horizontal schwenkbar angeschlossen sind, so daß sie in ihrer Transportstellung mit ihrer äußeren Begrenzung in etwa innerhalb der äußeren Abmessung des hinteren Rahmenträgers liegen. Die beiden Laufräder zur Aufnahme des Arbeitsgerätes sind jedoch an der äußeren Seite des hinteren Rahmenträgers angeordnet, so daß die Gesamtbreite der Maschine durch die Gesamtbreite des hinteren Rahmenteils nebst den Laufrädern bestimmt wird. Außerdem ist eine derartige Anordnung der Laufräder sowie die Ausbildung des hinteren Rahmenträgers sehr aufwendig und teuer.

Demgegenüber liegt der Erfindung die Aufgabe zugrunde, die einzelnen Rahmenteile derart auszubilden und anzuordnen, daß die einzelnen Arbeitswerkzeuge ohne weiteres an dem Rahmenträger verstellt werden können, ohne daß die Laufräder eine derartige Verstellung der Arbeitswerkzeuge behindern, wobei in der Arbeits- sowie in der Transportstellung eine ausreichende Stabilität für das Arbeitsgerät auf kleinstem Raum gewährleistet ist.

Diese Aufgabe ist dadurch gelöst worden, daß der mittlere Rahmenteil über einen einzigen in Fortsetzung zur Anhängevorrichtung verlaufenden Träger an den feststehenden Querträger angeschlossen ist und die Laufräder des mittleren Rahmenteils beiderseits des Trägers von dem Rahmenteil sich nach vorne erstrecken und innerhalb der äußeren Begrenzung des mittleren Rahmenteils liegen. Durch die vorteilhafte Ausbildung und Anordnung der an der Anhängevorrichtung angeschlossenen Rahmenteile lassen sich diese ohne weiteres von einer Arbeitsstellung in eine Transportstellung verschwenken, in der das gesamte Arbeitsgerät mit einem Minimum an Platz auskommt, da die beiden Laufräder zwischen dem mittleren abstützbaren Rahmenteil zur Aufnahme der Laufräder und dem Querträger zur Aufnahme der verschwenkbar angeordneten Rahmenteile angeschlossen sind. Da außerdem die beiden äußeren verschwenkbar angeschlossenen Rahmenteile mit Abstand zum mittleren Rahmenteil angeordnet sind, liegen diese bei Einnahme einer Transportlage auch innerhalb der äußeren Begrenzung der mittleren Rahmenteile. Durch die vorteilhafte Lage der Laufräder wird vermieden, daß diese außerhalb der seitlichen Begrenzung des Arbeitsgerätes liegen. Durch die versetzte Anordnung der Rahmenteile wird während des Arbeitseinsatzes sowie während der Transportfahrt die Gesamtstabilität des Arbeitsgerätes in keiner Weise beeinflußt, da die Laufräder vor dem mittleren Rahmenteil angeordnet sind und dabei die Laufradachse in etwa auf der Mittelachse des mittleren Rahmenteils liegen kann. Darüber hinaus ist durch die vorteilhafte Anordnung der Laufräder an der Vorderseite der einzelnen Rahmenteile ohne weiteres eine Seitenverstellung der einzelnen Arbeitswerkzeuge bzw. Pflanzgeräte oder auch anderer Arbeitswerkzeuge möglich, da die Seitenbewegung der Geräteteile an den Rahmenteilen nicht durch die Laufräder behindert wird.

Da lediglich ein einziger sich in Fahrtrichtung erstreckender Träger vorgesehen ist, der in Fortsetzung zur Anhängevorrichtung verläuft, erhält man eine relativ schmale Maschine in Transportstellung, da die verstellbaren Rahmenteile relativ dicht an die Anhängevorrichtung herangeschwenkt werden können. Durch die paarweise angeordneten Laufräder wird außerdem verhindert, daß bei Fahrten am Hang die Stabilität des Arbeitsgerätes nachteilig beeinflußt wird.

Da in weiterer Ausgestaltung der Erfindung die beiden verschwenkbaren Rahmenteile über zwei mit Abstand zueinander angeordnete Gelenke verstellbar sind, lassen sich einmal die Rahmenteile ganz dicht an die Anhängevorrichtung heranschwenken, und zum anderen ist gewährleistet, daß während des Arbeitseinsatzes lediglich ein Teil des quer verlaufenden Rahmenteils der Bodenkontur folgt, während der Arbeitsteil von Schlepper nach vorne bewegt wird. Auf diese Weise kann die Höhenbewegung der außenliegenden Arbeitswerkzeuge bei unebenem Gelände relativ klein gehalten werden.

Im folgenden wird die Erfindung anhand von lediglich ein Ausführungsbeispiel darstellenden Zeichnungen näher erläutert. Es zeigt :

Figur 1 den Rahmen eines landwirtschaftlichen Arbeitsgerätes in einer Arbeitsstellung in der Ansicht von oben,

Figur 2 dasselbe Arbeitsgerät wie in Fig. 1, jedoch in einer Transportstellung.

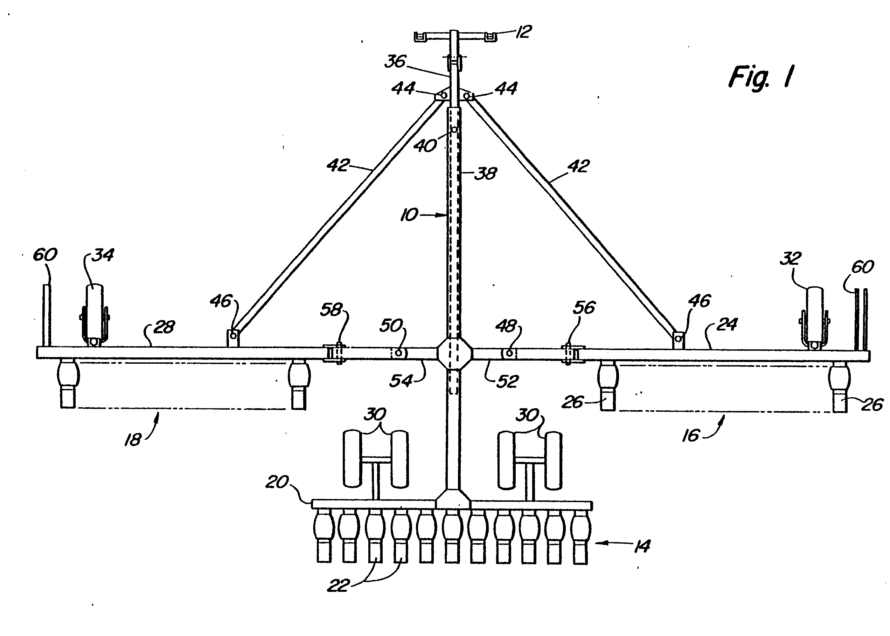

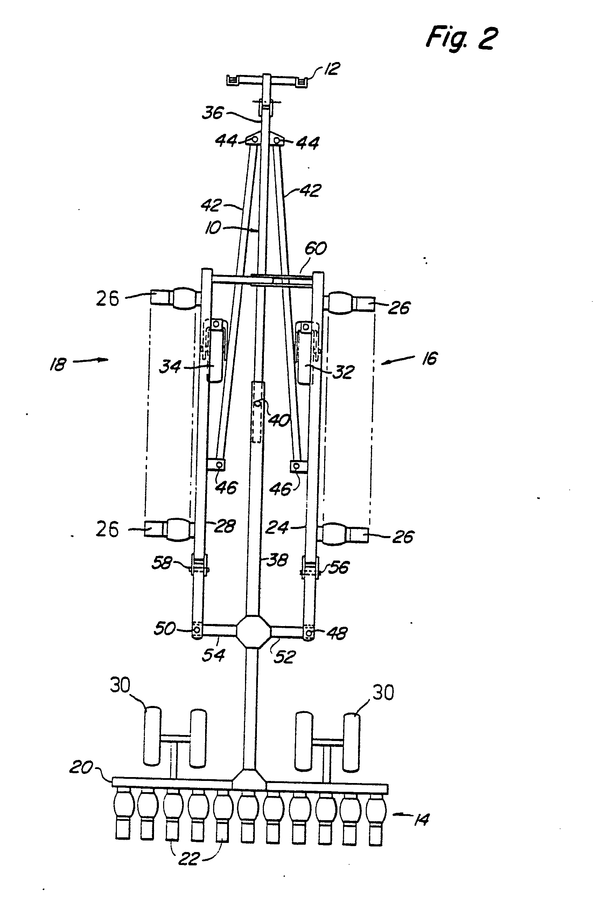

Die in Fig. 1 und 2 dargestellte Arbeitsmaschine ist eine mehrreihige Pflanz- bzw. Sämaschine, obwohl die nachfolgend beschriebene Erfindung nicht auf solche Maschinen begrenzt ist. Beispielsweise können derartige Rahmen auch für Bodenarbeitsgeräte, beispielsweise Scheibenpflüge bzw. Drillmaschinen oder Grubber, eingesetzt werden. In Fig. 1 ist die landwirtschaftlich nutzbare Arbeitsmaschine mit einer Anhängevorrichtung 10 ausgerüstet, die an eine Anhängeschiene 12 eines in der Zeichnung nicht dargestellten Zugfahrzeuges, beispielsweise eines Schleppers, anschließbar ist. Die Anhängevorrichtung 10 ist an ihrem rückwärtigen Ende mit einem Geräteteil 14 ausgerüstet, der beiderseits von Geräteteilen 16 und 18 flankiert wird. Der hintere Geräteteil 14 besteht aus Rahmenteil 20, der zur Aufnahme zahlreicher nebeneinander angeordneter Pflanzgeräte bzw. Sävorrichtungen 22 dient, die an dem Rahmenteil über entsprechende in der Zeichnung nicht weiter dargestellte Anschlußelemente seitenverschieblich angeschlossen sind. Der rechte Geräteteil 16 weist Rahmenteil 24 auf, an dem ebenfalls zahlreiche Arbeitswerkzeuge, im Ausführungsbeispiel Pflanzgeräte 26, angeschlossen sind, die den an dem Rahmenteil 20 angeordneten Pflanzgeräten 22 entsprechen und die auf gleiche Weise seitenverschieblich am Rahmenteil 24, 28 gelagert sind, um die Pflanzgeräte auf unterschiedliche Reihenabstände einzustellen. Der linke Rahmenteil 28 weist ebenfalls wie der rechte Rahmenteil 24 Pflanzgeräte 26 auf, die seitenverschiebbar an einem Rahmenteil 28 angeordnet sind.

Die Pflanzgeräte 22 sind am mittleren Rahmenteil 20 angeschlossen und erstrecken sich von diesem nach hinten. An der Frontseite des Rahmenteils 20 befinden sich rechts und links von der Anhängevorrichtung 10 zwei paarweise angeordnete Laufräder 30 zur Abstützung des Rahmenteils 20. Da sich die Laufräder 30 vor den Arbeitswerkzeugen bzw. den Pflanzgeräten 22 befinden, können sie nicht mit diesen kollidieren, wenn diese beispielsweise seitlich an dem Rahmenteil 20 verstellt werden, um die Arbeitswerkzeuge auf unterschiedliche Reihenabstände einzustellen. Die Geräteteile 16 und 18 stützen sich auf Laufrädern 32 und 34 ab, die ebenfalls an der Frontseite des Rahmenteils 24 bzw. 28 angeschlossen sind. Somit ist es ebenfalls möglich, die Arbeitswerkzeuge bzw. die Pflanzgeräte ungehindert an der Rückseite der Rahmenteile 24 und 28 auf unterschiedliche Reihenabstände einzustellen.

Wie insbesondere aus Fig. 1 hervorgeht, weist das innenliegende Ende des Rahmenteils 24 bzw. 28 einen seitlichen Abstand zur Anhängevorrichtung 10 auf, wobei der jeweilige Abstand des innenliegenden Endes eines jeden Rahmenteils 24, 28 zur Anhängevorrichtung 10 gleich ist. Das innenliegende Ende eines jeden Rahmenteils 24, 28 kann innerhalb der äußeren Begrenzung des mittleren Rahmenteils 20 liegen. Es ist jedoch auch möglich, daß innerhalb dieses Zwischenraumes zwischen den gegenüberliegenden Enden der Rahmenteile 24 und 28 sich der mittleren Rahmenteil 20 befindet. Somit endet jeweils das innenliegende Ende der beiden vorderen Rahmenteile 24 und 28 dicht vor den entsprechenden Laufrädern 30 des mittleren Rahmenteils 20. Auf diese Weise lassen sich die Laufräder 30 an einer Stelle derart an den Rahmenteil 20 anschließen, daß stets eine ausreichende Stabilität der Maschine während des Arbeitseinsatzes oder der Transportfahrt gewährleistet ist. Die für das Arbeitsgerät verwendeten Laufräder bzw. Laufrollen 30 bis 34 haben jeweils beim Arbeitseinsatz bzw. bei der Transportfahrt, wenn die Rahmenteile 24 und 28 nach vorne zusammengeführt worden sind, Bodenkontakt, so daß das Arbeitsgerät stets von den Laufrädern 30 bis 34 getragen wird.

Die Anhängevorrichtung 10 besteht aus einem vorderen sich in Fahrtrichtung erstreckenden Gestänge 36 und einem hinteren Gestänge 38, die teleskopartig ineinandergeschoben werden. Im Arbeitseinsatz wird die Anhängevorrichtung 10 bzw. werden die Gestänge 36 und 38 ineinandergeschoben und über entsprechende Arretierungselemente, beispielsweise einen Arretierungsbolzen 40, festgestellt, so daß eine weitere Verstellung der beiden Gestänge nicht mehr möglich ist. Es ist jedoch jederzeit möglich, die Arretierungselemente bzw. den Arretierungsbolzen 40 zu entfernen, um die beiden Gestänge 36 und 38 der Anhängevorrichtung 10 für die Transportfahrt auseinanderzuziehen. Die Verstellung der Anhängevorrichtung in einer Transportfahrt kann beispielsweise über in der Zeichnung nicht dargestellte Hydraulikvorrichtungen vorgeführt werden oder durch Vorwärtsfahrt eines mit dem Arbeitsgerät verbundenen Schleppers. Im Bereich des vorderen Endes des Gestänges 36 sind Zugstangen 42 angeschlossen, die mit ihrem entsprechenden hinteren Ende über einen Kupplungsbolzen 46 an an den Rahmenteilen 24 und 28 vorgesehene Halterungen gelenkig angeschlossen sind. Die Anschlußstellen der Zugstange 42 am Rahmenteil 24 bzw. 28 befinden sich seitlich eines rechten und linken horizontal verlaufenden Gelenkbolzens 56 und 58 zur gelenkigen Verbindung der Rahmenteile 24 und 28 mit je einem Lenker bzw. Zwischenstück. Das an die Rahmenteile 24, 28 angeschlossene Zwischenstück ist jeweils über einen vertikal verlaufenden Gelenkbolzen 48 und 50 mit den entsprechenden an dem Gestänge 38 angeordneten Streben 52, 54 gelenkig verbunden. Auf diese Weise können die Rahmenteile 24 und 28 und somit die daran angeschlossenen Arbeitswerkzeuge während des Arbeitseinsatzes bei unebenem Gelände auf- und abwärts bewegt werden.

Befindet sich das Arbeitsgerät in Transportstellung, so werden die Geräteteile 16 und 18 über entsprechende Verbindungselemente, beispielsweise Gestänge 60, fest miteinander verbunden. Anstelle der in Fig. 2 dargestellten Gestängen 60 können auch andere Verriegelungselemente, beispielsweise Verriegelungslaschen, verwendet werden, die beispielsweise für die Transportsicherung der Geräteteile 16 und 18 mit dem Gestänge 36 fest verbunden werden. Als besonders vorteilhaft wird angesehen, daß die Geräteteile 16 und 18 in beiden Stellungen, d. h. also in der Transport- sowie in der Arbeitsstellung, von den Laufrädern 32 und 34 getragen werden. Somit ist es vorteilhaft, wenn die Laufräder 32 und 34 im Bereich des Schwerpunktes des gezogenen Arbeitsgerätes angeordnet sind, so daß eine nicht zu große Belastung der Anhängeschiene 12 erfolgt. Die Laufräder 32, 34 lassen sich zur Verschwenkung der Rahmenteile 24, 28 in eine Transportstellung um eine vertikal verlaufende Achse verstellen und an die Innenseite der Rahmenteile 24, 28 heranklappen, so daß die äußere Begrenzung der Pflanzgeräte 26 der seitlichen Rahmenteile innerhalb der äußeren Begrenzung des mittleren Rahmenteils 20 liegt. Die seitliche Begrenzung der hinteren Laufräder 30 liegt in etwa auf der gleichen Längsebene wie die äußere Begrenzung der Pflanzgeräte 26, wenn sich diese in der Transportstellung befinden. Somit erhält man eine gute Gewichtsverteilung aller Teile des Arbeitsgerätes. Gleichzeitig wird durch die vorteilhafte Anordnung der Laufräder 30 und durch den ausreichenden Abstand zum Gestänge 38 ein fahrstabiles Arbeitsgerät geschaffen.

**Patentansprüche**

1. Landwirtschaftlich nutzbares Arbeitsgerät zum Anschluß an einen Schlepper mit einer sich in Fahrtrichtung erstreckenden Anhängevorrichtung (10) und einem mittleren auf Laufrädern (30) abstützbaren Rahmenteil (20) zur Aufnahme von Geräteteilen bzw. Arbeitswerkzeugen, z. B. Pflanzgeräte (22), sowie rechten und linken ebenfalls aus Laufrädern (32, 34) abstützbaren, Geräteteile bzw. Arbeitswerkzeuge (Pflanzgeräte 26), aufweisenden, verstellbar angeordneten Rahmenteilen (24, 28), die an einen feststehenden Querträger (52, 54) angeschlossen sind und sich in der Arbeitsstellung quer zur Bewegungsrichtung des Arbeitsgerätes erstrecken und aus dieser Stellung in eine Transportlage verschwenkbar sind, in die sie sich in Längsrichtung der Anhängevorrichtung (10) erstrecken, wobei der mittlere Rahmenteil (20) über mindestens einen sich in Fahrtrichtung erstreckenden Träger an die Rückseite des feststehenden Querträgers (52, 54) mit Abstand dazu angeschlossen ist, dadurch gekennzeichnet, daß der mittlere Rahmenteil (20) über einen einzigen in Fortsetzung zur Anhängevorrichtung (10) verlaufenden Träger an den feststehenden Querträger (52, 54) angeschlossen ist und die Laufräder (30) des mittleren Rahmenteils (20) beiderseits des Trägers von dem Rahmenteil (20) sich nach vorne erstrecken und innerhalb der äußeren Begrenzung des mittleren Rahmenteils (20) liegen.

2. Arbeitsgerät nach Anspruch 1, dadurch gekennzeichnet, daß im Arbeitseinsatz die Laufräder (32, 34) eines jeden verschwenkbaren Rahmenteils (24, 28) an der Vorderseite der verschwenkbaren Rahmenteile vor den Geräteteilen bzw. Arbeitswerkzeugen z. B. Pflanzgeräte (22), angeordnet sind.

3. Arbeitsgerät nach Anspruch 1 und 2, dadurch gekennzeichnet, daß in der Arbeitsstellung jeweils das innenliegende Ende, z. B. der Gelenkbolzen (50) eines jeden verschwenkbaren Rahmenteils (24, 28) seitlich innerhalb der äußeren Begrenzung des mittleren Rahmenteils bzw. der Laufräder (30) dieses Rahmenteils liegt.

4. Arbeitsgerät nach Anspruch 3, dadurch gekennzeichnet, daß die Laufräder (30) des mittleren Rahmenteils (20) beiderseits der Anhängevorrichtung (10) paarweise angeordnet und koaxial zueinander ausgerichtet sind.

5. Arbeitsgerät nach einem oder mehreren der vorherigen Ansprüche, dadurch gekennzeichnet, daß die verschwenkbaren Rahmenteile (24, 28) über je ein außenliegendes, horizontal verlaufendes Gelenk, z. B. der Gelenkbolzen (58), einen Lenker und ein mit Abstand zum ersten Gelenk angeordnetes, vertikal verlaufendes Gelenk an die Anhängevorrichtung (10) angeschlossen sind, wobei die Laufräder (34) der seitlichen Rahmenteile um eine vertikale Achse verstellbar sind.

### Claims

1. A working implement which can be used for agricultural purposes for connection to a tractor comprising an attachment means (10) which extends in the direction of travel and a middle frame portion (20) which can be supported on support wheels (30), for carrying implement members or working tools, for example planting implement (22), and right-hand and left-hand displaceably arranged frame portions (24, 28) which can also be supported on support wheels (32, 34) and which have implement members or working tools (planting implements 26) and which are connected to a fixed transverse support (52, 54) and which extend in the working position transversely with respect to the direction of movement of the working implement and which are pivotable from that position into a transportation position in which they extend in the longitudinal direction of the attachment means (10), wherein the middle frame portion (20) is connected to the back of the fixed transverse support (52, 54) at a spacing with respect thereto, by way of at least one support which extends in the direction of travel, characterised in that the middle frame portion (20) is connected to the fixed transverse support (52, 54) by way of a single support which extends in line with the attachment means (10) and the support wheels (30) of the middle frame portion (20) extend forwardly on both sides of the support from the frame portion (20) and lie within the outer limits of the middle frame portion (20).

2. A working implement according to claim 1 characterised in that in operation the support wheels (32, 34) of each pivotable frame portion (24, 28) are arranged at the front side of the pivotable frame portions, in front of the implement members or working tools, for example planting implements (22).

3. A working implement according to claim 1 or claim 2 characterised in that in the operative position the inward end, for example the pivot pin (50), of each pivotable frame portion (24, 28) is disposed laterally within the outer limits of the middle frame portion or the support wheels (30) of said frame portion.

4. A working implement according to claim 3 characterised in that the support wheels (30) of the middle frame portion (20) are arranged in pairs on both sides of the attachment means (10) and are arranged in mutually coaxial relationship.

5. A working implement according to one or more of the preceding claims characterised in that the pivotable frame portions (24, 28) are connected to the attachment means (10) by way of a respective outward, horizontally extending pivot, for example the pivot pin (58), a link and a vertically extending pivot which is arranged at a spacing with respect to the first pivot, wherein the support wheels (34) of the lateral frame portions are displaceable about a vertical axis.

### Revendications

1. Machine utilisable en agriculture, destinée à être raccordée à un tracteur, comportant un dispositif d'attelage (10) s'étendant dans le sens de marche et une partie de châssis médiane (20) pouvant s'appuyer sur des roues porteuses (30) pour la réception de parties de machine ou outils, par exemple de dispositifs planteurs (22), ainsi que des parties de châssis de droite et de gauche (24, 28), pouvant également prendre appui sur des roues porteuses (32, 34), disposées de façon à pouvoir être déplacées et comportant des parties de machine ou outils (dispositifs planteurs (26)) qui se raccordent à une traverse fixe (52, 54) et s'étendent, en position de travail, transversalement par rapport à la direction de déplacement de la machine et peuvent passer en pivotant de cette position dans une position de transport dans laquelle elles s'étendent dans la direction longitudinale du dispositif d'attelage (10), la partie de châssis médiane (20) se raccordant par l'intermédiaire d'au moins un longeron s'étendant dans le sens de marche à la face postérieure de la traverse fixe (52, 54) à distance de celle-ci, caractérisée en ce que la partie de châssis médiane (20) est raccordée par un seul longeron (ou entretoise) dirigé dans le prolongement du dispositif d'attelage (10) à la traverse fixe (52, 54), et en ce que les roues porteuses (30) de la partie de châssis médiane (20) s'étendent des deux côtés du longeron de la partie de châssis (20) vers l'avant et se trouvent à l'intérieur de la limite extérieure de la partie de châssis médiane (20).

2. Machine suivant la revendication 1, caractérisée en ce qu'en cours de travail les roues porteuses (32, 34) de chaque partie de châssis pivotante (24, 28) sont placées sur la face avant des parties de châssis pivotantes, en avant des parties de machine ou outils, par exemple des dispositifs planteurs (22).

3. Machine suivant les revendications 1 et 2, caractérisée en ce que, dans la position de travail, chaque extrémité intérieure, par exemple l'axe d'articulation (50), de chaque partie de châssis pivotante (24, 28), se trouve latéralement à l'intérieur de la limite extérieure de la partie de châssis médiane ou des roues porteuses (30) de cette partie de châssis.

4. Machine suivant la revendication 3, caractérisée en ce que les roues porteuses (30) de la partie de châssis médiane (20) sont disposées par paires de part et d'autre du dispositif d'attelage (10) et sont dirigées coaxialement l'une par rapport à l'autre.

5. Machine suivant une ou plusieurs des revendications précédentes, caractérisée en ce que les parties de châssis pivotantes (24, 28) sont raccordées chacune par une articulation extérieure dirigée horizontalement respective, par exemple l'axe d'articulation (58), une biellette ou une articulation dirigée verticalement, disposée à distance de la première articulation, au dispositif d'attelage (10), les roues porteuses (34) des parties de châssis latérales pouvant être déplacées autour d'un axe vertical.

Fig. I

*Fig. 2*